# EUROPEAN PATENT APPLICATION

(11) **EP 4 818 040 A2**
(43) Date of publication of application: **07.10.2026**
(21) Application number: 26170656.8
(22) Date of filing: 02.04.2026
(51) Int. Cl.: B64C 11/06, B64C 11/32, B64C 11/34, B64C 29/00, B64U 10/20, B64U 40/10

(54) **VARIABLE-PITCH PROPELLER PASSIVELY CONTROLLED BY THRUST**

(30) Priority: 04.04.2025 US 202519170319
(71) Applicant: Lockheed Martin Corporation, Bethesda, MD 20817 (US)
(72) Inventor: STOREY, Terrance James Elliott, San Luis Obispo, CA 93401-6823 (US); ABEL, Gavin Paul, Santa Maria, CA 93599 (US); GUYTON, Jason David, Valencia, CA 91355 (US); GAMBLE, Dustin Eli, San Luis Obispo, CA 93401 (US)
(74) Representative: Barker Brettell LLP

(57) **Abstract**

A variable pitch propeller (130; 200) includes a ball spline shaft (230), a ball spline bearing (240) configured to slide along the ball spline shaft (230), and a thrust spring (220) installed around the ball spline shaft (230). The variable pitch propeller (130; 200) further includes a hub (250) coupled to or integrated with the ball spline bearing (240), a plurality of control arms (260) coupled to the hub (250), a plurality of blade holders (270) coupled to the control arms (260), and a plurality of propeller blades (275). Each propeller blade (275) is coupled to one of the blade holders (270) and can rotate between a high-pitch position and a low-pitch position as the ball spline bearing (240) slides along the ball spline shaft (230). The thrust spring (220) controls the sliding of the ball spline bearing (240) along the ball spline shaft (230) based on an amount of thrust provided by the variable pitch propeller (130; 200), thereby automatically adjusting the pitch positions of the propeller blades (275) based on the amount of thrust.

## Description

### TECHNICAL FIELD

This disclosure generally relates to propellers, and more specifically to a variable-pitch propeller that is passively controlled by thrust.

### BACKGROUND

Vertical takeoff and landing (VTOL) aircraft are capable of both horizontal cruise flight as well as vertical/hover flight. As one example, an electric fixed-wing VTOL unmanned aerial vehicle (UAV) may include one or more propellers that tilt in order to support both vertical and horizontal modes of flight. As another example, a tail sitter aircraft may include one or more propellers that allow the aircraft to take off and land vertically on the tail of the aircraft in addition to regular horizontal flight. In these and other aircraft where the same propellers are used in both vertical and horizontal modes of flight, it is typically desirable to utilize different propeller blade pitches for the different modes of flight. For example, hovering or vertical flight typically requires a lower propeller blade pitch while fixed wing horizonal flight typically requires a higher propeller blade pitch.

### SUMMARY

In some embodiments, an aircraft includes a fixed wing, a motor, and a variable pitch propeller coupled to the motor. The variable pitch propeller includes a shaft, a hub configured to slide along the shaft, and a plurality of propeller blades. Each propeller blade is coupled to the hub and is configured to rotate between a high-pitch position and a low-pitch position as the hub slides along the shaft. The variable pitch propeller further includes a thrust spring installed around the shaft. The thrust spring is configured to control the sliding of the hub along the shaft based on an amount of thrust provided by the variable pitch propeller, thereby automatically adjusting the pitch positions of the propeller blades based on the amount of thrust.

In some embodiments, a variable pitch propeller includes a ball spline shaft, a collet coupled proximate one end of the ball spline shaft, and a ball spline bearing configured to slide along the ball spline shaft. The variable pitch propeller further includes a thrust spring installed around the ball spline shaft between the collet and the ball spline bearing, a base mounting plate coupled to the ball spline on an opposite side of the ball spline bearing from the thrust spring, a hub coupled to the ball spline bearing, and a plurality of control arms. Each control arm is coupled to the hub and the base mounting plate. The variable pitch propeller further includes a plurality of blade holders and a plurality of propeller blades. Each blade holder is coupled to one of the control arms, and each propeller blade is coupled to one of the blade holders. Each propeller blade is configured to rotate between a high-pitch position and a low-pitch position as the ball spline bearing slides along the ball spline shaft. The thrust spring is configured to control the sliding of the ball spline bearing along the ball spline shaft based on an amount of thrust provided by the variable pitch propeller, thereby automatically adjusting the pitch positions of the propeller blades based on the amount of thrust.

**In** some embodiments, a variable pitch propeller includes a ball spline shaft, a ball spline bearing configured to slide along the ball spline shaft, and a thrust spring installed around the ball spline shaft. The variable pitch propeller further includes a hub coupled to or integrated with the ball spline bearing, a plurality of control arms coupled to the hub, a plurality of blade holders coupled to the control arms, and a plurality of propeller blades. Each propeller blade is coupled to one of the blade holders and can rotate between a high-pitch position and a low-pitch position as the ball spline bearing slides along the ball spline shaft. The thrust spring controls the sliding of the ball spline bearing along the ball spline shaft based on an amount of thrust provided by the variable pitch propeller, thereby automatically adjusting the pitch positions of the propeller blades based on the amount of thrust.

Technical advantages of certain embodiments may include providing a thrust-controlled variable pitch propeller that automatically adjusts the pitch positions of the propeller blades based on the amount of thrust. Instead of using actuators and/or computer controllers to adjust the pitch positions of propeller blades as may be used by existing aircraft, the embodiments of the disclosure utilize purely mechanical mechanisms to automatically adjust the pitch positions of propeller blades based on the amount of thrust of the propeller. By automatically adjusting pitch positions of propeller blades based on an amount of thrust instead of requiring heavy or complex mechanisms to adjust the pitch positions of the propeller blades, the thrust-controlled variable pitch propeller of the disclosed embodiments may be utilized for both vertical and horizontal modes of flight in aircraft such as electric VTOL UAVs.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present disclosure and its advantages, reference is now made to the following descriptions taken in conjunction with the accompanying drawings, in which:
FIGURE 1 is an illustration of an aircraft utilizing one or more thrust-controlled variable pitch propellers, according to particular embodiments.
FIGURES 2A-2B illustrate a thrust-controlled variable pitch propeller that may be utilized by the aircraft of FIGURE 1, according to particular embodiments.
FIGURES 3A-3B illustrate different blade pitches for the thrust-controlled variable pitch propeller of FIGURES 2A-2B, according to particular embodiments.
FIGURE 4 is an illustration of a spinner that may be utilized by the thrust-controlled variable pitch propeller of FIGURES 2A-2B, according to particular embodiments.
FIGURE 5 is an illustration of a ball spline bearing that may be utilized by the thrust-controlled variable pitch propeller of FIGURES 2A-2B, according to particular embodiments.
FIGURES 6A-6B illustrate a blade hub that may be utilized by the thrust-controlled variable pitch propeller of FIGURES 2A-2B, according to particular embodiments.
FIGURE 7 is an illustration of a base mounting plate that may be utilized by the thrust-controlled variable pitch propeller of FIGURES 2A-2B, according to particular embodiments.
FIGURE 8 illustrates another thrust-controlled variable pitch propeller that may be utilized by the aircraft of FIGURE 1, according to particular embodiments.

It should be understood that the drawings are not necessarily to scale and that the disclosed embodiments are sometimes illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular embodiments illustrated herein.

### DETAILED DESCRIPTION

The disclosure presented in the following written description and the various features and advantageous details thereof, are explained more fully with reference to the non-limiting examples included in the accompanying drawings and as detailed in the description. Descriptions of well-known components have been omitted to not unnecessarily obscure the principal features described herein. The examples used in the following description are intended to facilitate an understanding of the ways in which the disclosure can be implemented and practiced. A person of ordinary skill in the art would read this disclosure to mean that any suitable combination of the functionality or exemplary embodiments below could be combined to achieve the subject matter claimed. The disclosure includes either a representative number of species falling within the scope of the genus or structural features common to the members of the genus so that one of ordinary skill in the art can recognize the members of the genus. Accordingly, these examples should not be construed as limiting the scope of the claims.

A person of ordinary skill in the art would understand that any system claims presented herein encompass all of the elements and limitations disclosed therein, and as such, require that each system claim be viewed as a whole. Any reasonably foreseeable items functionally related to the claims are also relevant. The Examiner, after having obtained a thorough understanding of the disclosure and claims of the present application has searched the prior art as disclosed in patents and other published documents, i.e., nonpatent literature. Therefore, as evidenced by issuance of this patent, the prior art fails to disclose or teach the elements and limitations presented in the claims as enabled by the specification and drawings, such that the presented claims are patentable under the applicable laws and rules of this jurisdiction.

Vertical takeoff and landing (VTOL) aircraft are capable of both horizontal cruise flight as well as vertical/hover flight. As one example, an electric fixed-wing VTOL unmanned aerial vehicle (UAV) may include one or more propellers that tilt in order to support both vertical and horizontal modes of flight. As another example, a tail sitter aircraft may include one or more propellers that allow the aircraft to take off and land vertically on the tail of the aircraft in addition to regular horizontal flight. In these and other aircraft where the same propellers are used in both vertical and horizontal modes of flight, it is typically desirable to utilize different propeller blade pitches for the different modes of flight. For example, hovering or vertical flight typically requires a lower propeller blade pitch while fixed wing horizonal flight typically requires a higher propeller blade pitch.

To address these and other problems with an aircraft utilizing the same propellers for both vertical and horizontal modes of flight, the disclosed embodiments provide a thrust-controlled variable pitch propeller that autonomously and automatically adjusts the pitch positions of the propeller blades based on the amount of thrust. Instead of using actuators and/or computer controllers to adjust the pitch positions of the propeller blades as is typical on some existing aircraft, the embodiments of the disclosure utilize purely mechanical mechanisms to automatically adjust the pitch positions of the propeller blades based on the amount of thrust of the propeller. More specifically, embodiments of the disclosure utilize a blade hub that is able to slide along a ball spline shaft. Control arms are coupled to the blade hub and cause the propeller blades to rotate and change pitch positions as the blade hub slides along the ball spline shaft. A thrust spring is installed around the ball spline shaft and controls the sliding of the blade hub along the ball spline shaft based on an amount of thrust provided by the variable pitch propeller, thereby autonomously and automatically adjusting the pitch positions of the propeller blades based on the amount of thrust. As a result, the thrust-controlled variable pitch propeller may be used for both vertical and horizontal modes of flight in aircraft such as electric VTOL UAVs without requiring heavy or complex mechanisms to adjust the pitch positions of the propeller blades.

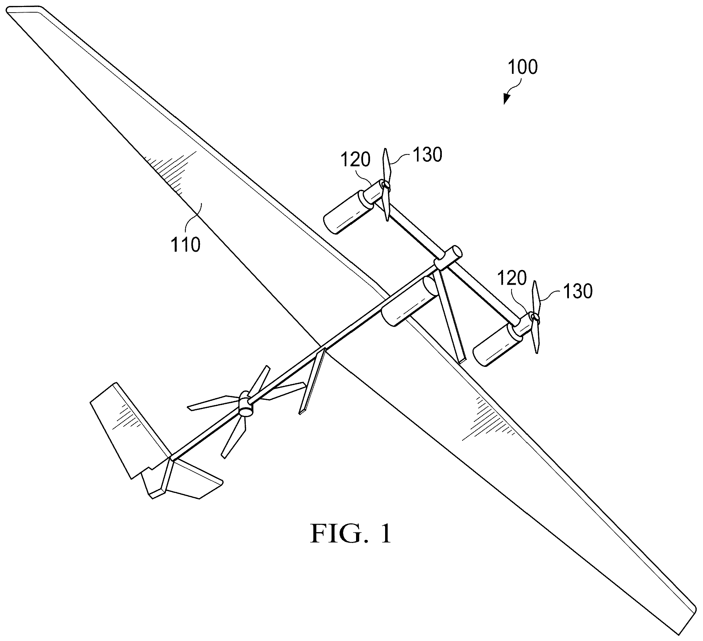

FIGURE 1 is an illustration of an aircraft 100, according to particular embodiments. In some embodiments, aircraft 100 includes a fixed wing 110, one or more motors 120, and a thrust-controlled variable pitch propeller 130 coupled to each of the one or more motors 120. In some embodiments, aircraft 100 includes two motors 120 and two thrust-controlled variable pitch propellers 130, as illustrated. In other embodiments, aircraft 100 may include any appropriate number of motors 120 and thrust-controlled variable pitch propellers 130. Aircraft 100 may be any appropriate aircraft in any appropriate configuration. For example, aircraft 100 may be a VTOL aircraft or non-VTOL aircraft, an electric or non-electric aircraft (e.g., motor 120 may be electric or non-electric), a manned or unmanned aircraft, a tail sitter aircraft, or any combination of these aircraft. In a particular embodiment, aircraft 100 is an electric VTOL UAV. In some embodiments, motors 120 and thrust-controlled variable pitch propellers 130 are configured to pivot between a vertical flight position and a horizontal flight position.

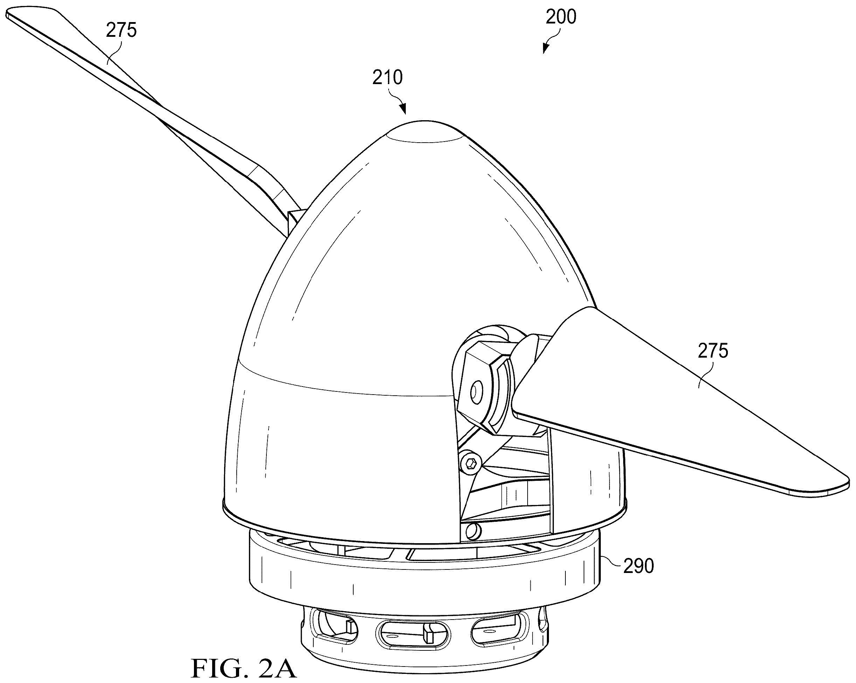

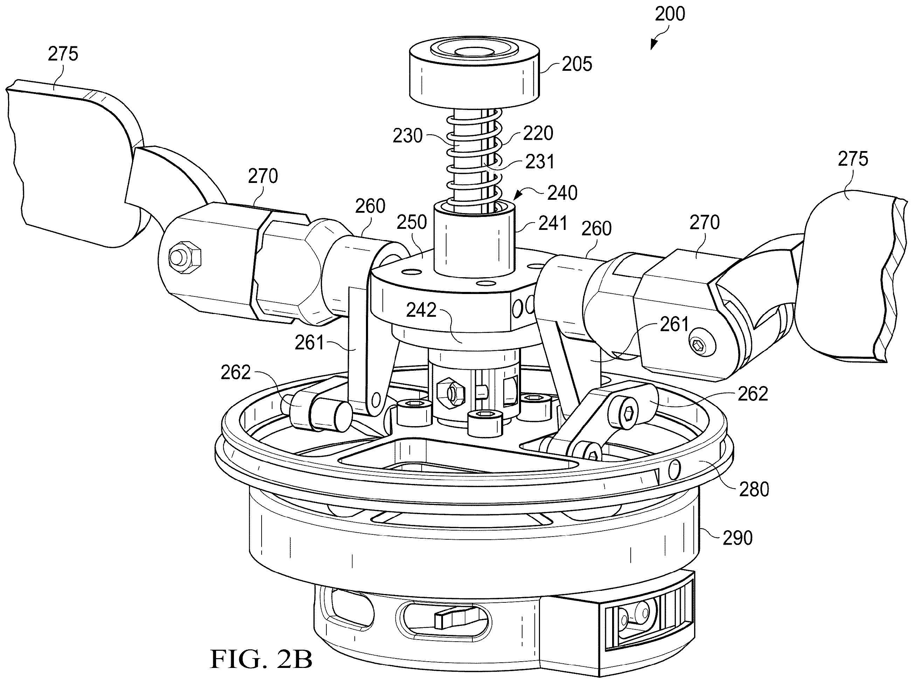

**In** general, aircraft 100 utilizes thrust-controlled variable pitch propellers 130 for both horizontal and vertical flight. To optimize the performance of aircraft 100 during these two modes of flights (e.g., to save power consumption of aircraft 100, to improve the flight performance of aircraft 100, etc.), the pitches of the propeller blades of thrust-controlled variable pitch propeller 130 are autonomously and automatically adjusted for each mode of flight. For example, for horizontal flight (e.g., fixed wing cruise flight), the propeller blades of thrust-controlled variable pitch propeller 130 are automatically adjusted to have a high pitch. For vertical/hovering flight, the propeller blades of thrust-controlled variable pitch propeller 130 are automatically adjusted to have a low pitch. Instead of utilizing heavy and complex mechanisms (e.g., actuators and computer controllers) to adjust the pitches of the propeller blades of thrust-controlled variable pitch propeller 130, however, thrust-controlled variable pitch propeller 130 utilizes purely mechanical mechanisms to autonomously and automatically control the pitches of the propeller blades based on an amount of thrust generated by thrust-controlled variable pitch propeller 130. In particular, some embodiments of thrust-controlled variable pitch propeller 130 utilize a blade hub that is able to slide along a ball spline shaft. Control arms are coupled to the blade hub and cause the propeller blades to rotate and change pitch positions as the blade hub slides along the ball spline shaft. A thrust spring is installed around the ball spline shaft and controls the sliding of the blade hub along the ball spline shaft based on an amount of thrust provided by thrust-controlled variable pitch propeller 130, thereby autonomously and automatically adjusting the pitch positions of the propeller blades based on the amount of thrust. Particular embodiments of thrust-controlled variable pitch propeller 130 are described in more detail below in reference to FIGURES 2A-7.

FIGURES 2A-2B illustrate a thrust-controlled variable pitch propeller 200 that may be utilized as thrust-controlled variable pitch propeller 130 by aircraft 100 of FIGURE 1, according to particular embodiments. FIGURE 2A illustrates thrust-controlled variable pitch propeller 200 with an installed spinner 210, and FIGURE 2A illustrates thrust-controlled variable pitch propeller 200 with spinner 210 removed. **In** some embodiments, thrust-controlled variable pitch propeller 200 includes a top collet 205, a thrust spring 220, a ball spline shaft 230, a ball spline bearing 240, a blade hub 250, control arms 260, blade holders 270, and a base mounting plate 280. Each blade holder 270 is coupled to a blade 275. Base mounting plate 280 couples thrust-controlled variable pitch propeller 200 to a motor 290.

In general, the pitches of blades 275 of thrust-controlled variable pitch propeller 200 are autonomously and automatically adjusted based on an amount of thrust generated by thrust-controlled variable pitch propeller 200. To enable the automatic adjustment of the pitches of blades 275, blades 275 are coupled to blade hub 250 via blade holders 270. Blade hub 250 is coupled to or otherwise integrated with ball spline bearing 240 that is able to slide along ball spline shaft 230. Control arms 260 are coupled to blade hub 250 and cause blades 275 to rotate and change pitch positions as blade hub 250 slides along ball spline shaft 230. Thrust spring 220 is installed around ball spline shaft 230 and controls the sliding of ball spline bearing 240 and blade hub 250 along ball spline shaft 230 based on an amount of thrust provided by thrust-controlled variable pitch propeller 200, thereby autonomously and automatically adjusting the pitch positions of blades 275 based on the amount of thrust. Each component of thrust-driven variable pitch propeller 200 is described in more detail below.

In some embodiments, thrust-controlled variable pitch propeller 200 includes a top collet 205 that is coupled proximate to one end of ball spline shaft 230. In some embodiments, top collet 205 contacts one end of thrust spring 220, and thrust spring 220 is sandwiched between top collet 205 and ball spline bearing 240. In general, top collet 205 is secured to ball spline shaft 230 using any appropriate fastener (e.g., a set screw) and secures components of thrust spring 220 to ball spline shaft 230.

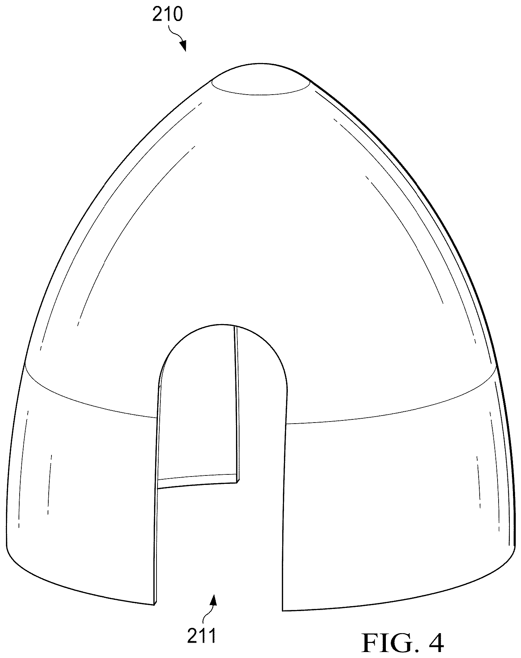

Spinner 210 is an aerodynamic cover for thrust-controlled variable pitch propeller 200. A particular embodiment of spinner 210 is shown in more detail in FIGURE 4. In some embodiments, spinner 210 is cone-shaped as illustrated. In some embodiments, spinner 210 is removably coupled to base mounting plate 280 using one more fasteners (e.g., screws). In some embodiments, spinner 210 includes a plurality of notches 211 that permit blades 275 to rotate between high-pitch positions and low-pitch positions as ball spline bearing 240 slides along ball spline shaft 230. The length of notches 211 (e.g., extending upwards from base mounting plate 280 towards the tip of spinner 210) may be sized according to the length of travel of ball spline bearing 240 along ball spline shaft 230 (e.g., as determined by thrust spring 220).

Thrust spring 220 is any appropriate spring that is installed around ball spline shaft 230 in order to control the sliding of ball spline bearing 240 along ball spline shaft 230 based on an amount of thrust generated by thrust-controlled variable pitch propeller 200. By controlling the sliding of ball spline bearing 240 along ball spline shaft 230, thrust spring 220 automatically controls the pitches of blades 275 based on the amount of thrust generated by thrust-controlled variable pitch propeller 200. In some embodiments, thrust spring 220 is installed around ball spline shaft 230 between top collet 205 and ball spline bearing 240. In these embodiments, one end of thrust spring 220 contacts top collet 205 and the opposite end of thrust spring 220 contacts ball spline bearing 240.

In some embodiments, thrust spring 220 is sized to match a desired thrust vs. pitch profile of aircraft 100. For example, a desired thrust vs. pitch profile may specify a desired pitch for blades 275 for various thrusts (e.g., in lbf) of motor 290. For example, below may be desired pitches of blades 275 for various thrusts:

| Mode | Thrust (lbf) per motor | Desired Pitch for Blades 275 |
|---|---|---|
| Vertical takeoff, hover | 10 | 6 |
| Vertical Climb | 12.5 | 7 |
| Vertical Landing | 8 | 4 |
| Fixed Wing | 1 | 20 |
| Fixed Wing Dash | 3 | 20 |

Here, the desired thrust vs. pitch profile specifies a lower pitch range of between 4-7 for vertical modes of flight (higher thrust range of 8 - 12.5), and a high pitch of 20 for horizontal fixed wing modes of flight (lower thrust range of 1 - 3). The size of thrust spring 220 (e.g., the compression strength, length, etc.) may be chosen to compress to meet this desired thrust vs. pitch profile (e.g., to compress for a thrust range of 8 - 12.5).

Ball spline shaft 230 is a shaft of any appropriate length. Ball spline shaft 230 is coupled to motor 290 either directly or via base mounting plate 280 and is caused to rotate by motor 290. In some embodiments, ball spline shaft 230 includes one or more shaft grooves 231 that enable ball spline bearing 240 to slide along ball spline shaft 230 while simultaneously rotating about ball spline shaft 230.

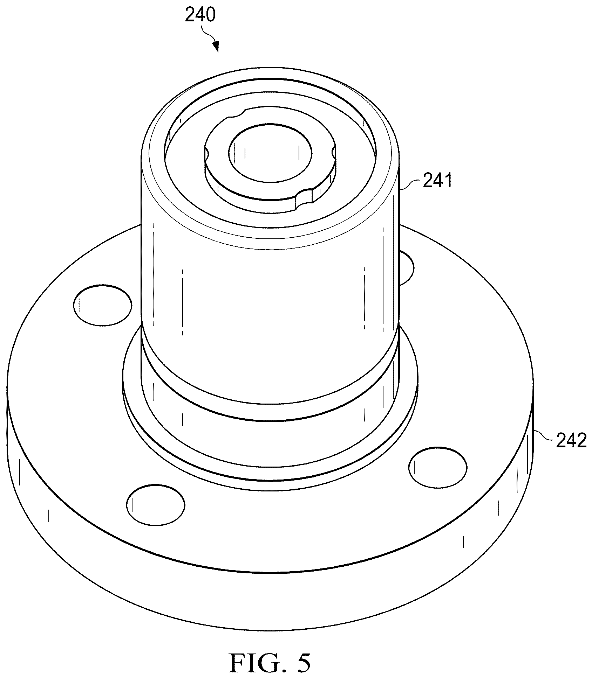

Ball spline bearing 240 is a component that is configured to slide along ball spline shaft 230. A particular embodiment of ball spline bearing 240 is illustrated in FIGURE 5. In some embodiments, ball spline bearing 240 includes a shaft portion 241 and a base plate portion 242. In some embodiments, shaft portion 241 is tubular in shape and the diameter of shaft portion 241 is smaller than the diameter of base plate portion 242. In some embodiments, the height of shaft portion 241 is larger than the height (e.g., thickness) of base plate portion 242. In some embodiments, shaft portion 241 includes one or more ball bearings (not illustrated) that align with shaft grooves 231 of ball spline shaft 230 and enable ball spline bearing 240 to slide along ball spline shaft 230 while simultaneously rotating about ball spline shaft 230. In some embodiments, base plate portion 242 includes one or more apertures as illustrated that enable blade hub 250 to be coupled to ball spline bearing 240 (e.g., via fasteners such as screws).

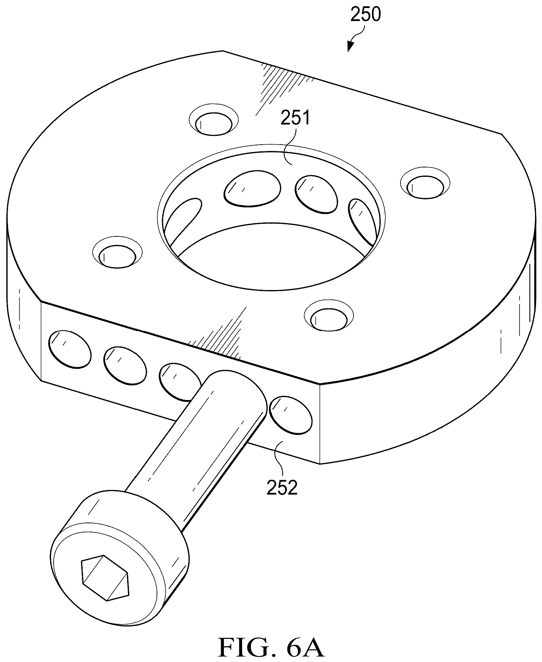

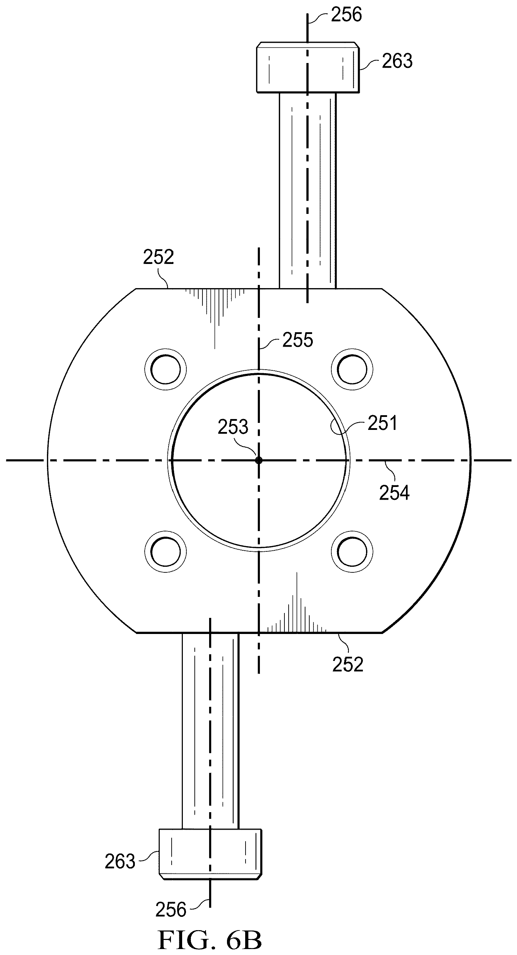

Blade hub 250 is a component that couples blade 275 to thrust-controlled variable pitch propeller 200. A particular embodiment of blade hub 250 is illustrated in FIGURES 6A and 6B. In some embodiments, blade hub 250 is a separate component that is coupled to ball spline bearing 240 using, for example, one or more fasteners such as screws. In other embodiments, blade hub 250 may be integrated with ball spline bearing 240 such that ball spline bearing 240 and blade hub 250 are manufactured as a single component. In some embodiments, blade hub 250 includes a center aperture 251 that is circular in shape and permits blade hub 250 to slide over shaft portion 241 of ball spline bearing 240. In these embodiments, the diameter of center aperture 251 is slightly larger than the diameter of shaft portion 241 of ball spline bearing 240.

In some embodiments, blade hub 250 is generally cylindrical in shape and includes two or more flat sides 252 according to the number of blades 275. For example, if thrust-controlled variable pitch propeller 200 includes two blades 275 as illustrated, blade hub 250 includes two flat sides 252. Blade hub 250 also may include a center point 253 that is concentric with ball spline shaft 230, and two axes that each run through center point 253: a first axis 254 and a second axis 255 that is orthogonal to first axis 254. Flat sides 252 are parallel to each other as illustrated. In addition, each flat side 252 is parallel to first axis 254 and is orthogonal to second axis 255. Each control arm 260 is coupled to a respective flat side 252 at a location that is off-center from second axis 255 as illustrated. For example, each upper control arm linkage 261 of control arm 260 may be coupled to a respective flat side 252 using a fastener 263 that is screwed into the respective flat side 252 at a location that is not aligned with second axis 255 as illustrated. More specifically, each axis 256 of each fastener 263 is not aligned with second axis 255 and is not aligned with the axis 256 of the fastener 263 that is coupled to the opposite flat side 252.

Each thrust-controlled variable pitch propeller 200 includes control arms 260 that are configured to control the pitch of blades 275 as blade hub 250 slides along ball spline shaft 230. In some embodiments, each control arm 260 includes an upper control arm linkage 261 and a lower control arm linkage 262. Upper control arm linkage 261 is pivotably coupled to a flat side 252 of blade hub 250 (e.g., using a fastener 263) at a location on the flat side 252 of blade hub 250 that is not aligned with second axis 255 as described above. Lower control arm linkage 262 is pivotably coupled to both upper control arm linkage 261 and base mounting plate 280 as illustrated. Blade holder 270 is securely coupled to upper control arm linkage 261 (i.e., is not pivotably coupled to upper control arm linkage 261) such that as blade hub 250 slides along ball spline shaft 230, upper control arm linkage 261 rotates and thereby causes blade holder 270 to rotate. The rotation of blade holder 270 causes blade 275 to rotate, thereby changing the pitch of blade 275.

Blades 275 are any appropriate propeller blades of any appropriate length and shape. Blade 275 may be made of any appropriate material such as plastic or metal. Each blade 275 is coupled to a blade holder 270 and is configured to rotate between a high-pitch position and a low-pitch position as ball spline bearing 240 and/or blade hub 250 slides along ball spline shaft 230.

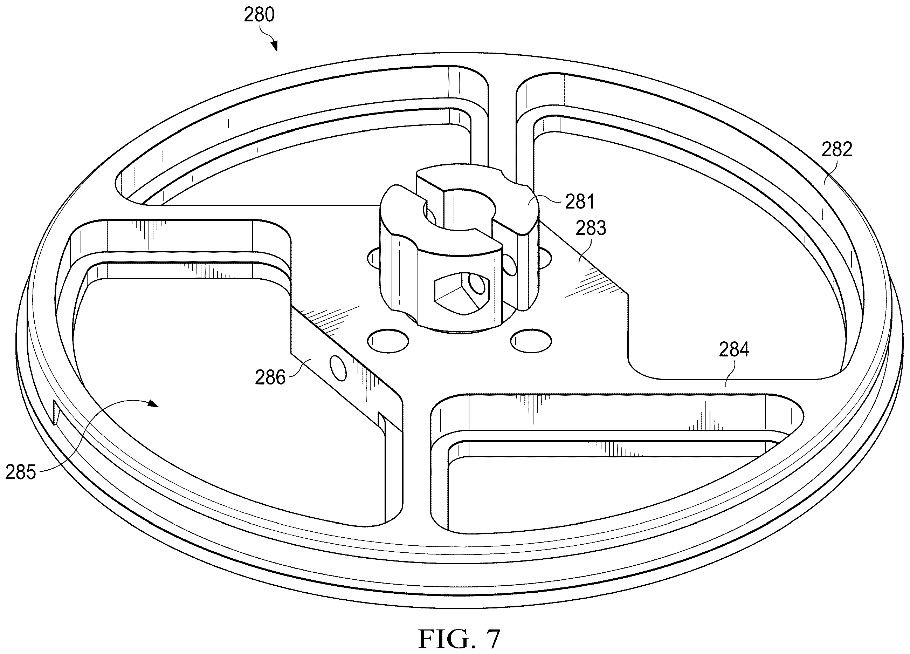

Base mounting plate 280 is a component that couples thrust-controlled variable pitch propeller 200 to motor 290. A particular embodiment of base mounting plate 280 is illustrated in FIGURE 7. In some embodiments, base mounting plate 280 is coupled to ball spline shaft 230 on an opposite side of ball spline bearing 240 from thrust spring 220. In some embodiments, base mounting plate 280 includes a clamp flange shaft mount 281 that is configured to couple base mounting plate 280 to ball spline shaft 230. In some embodiments, base mounting plate 280 includes an outer ring portion 282 that is configured to couple to spinner 210 (e.g., using one or more fasteners). In some embodiments, base mounting plate 280 includes a center portion 283 that includes clamp flange shaft mount 281. Center portion 283 may be coupled to outer ring portion 282 using members 284 such that base mounting plate 280 includes multiple apertures 285. Apertures 285 permit lower control arm linkages 262 of control arms 260 couple to center portion 283 along sides 286 of center portion 283.

In operation, the pitches of blades 275 of thrust-controlled variable pitch propeller 200 are autonomously and automatically adjusted based on an amount of thrust produced by thrust-controlled variable pitch propeller 200 (e.g., via motor 290). For example, for horizontal flight (e.g., fixed wing cruise flight) where the thrust of thrust-controlled variable pitch propeller 200 is lower, the blades 275 of thrust-controlled variable pitch propeller 200 are automatically adjusted to have a higher blade pitch. For vertical/hovering flight where the thrust of thrust-controlled variable pitch propeller 200 is higher, the blades 275 of thrust-controlled variable pitch propeller 200 are automatically adjusted to have a lower pitch. Instead of utilizing heavy and complex mechanisms (e.g., actuators and computer controllers) to adjust the pitches of blades 275 of thrust-controlled variable pitch propeller 200, however, thrust-controlled variable pitch propeller 200 utilizes purely mechanical mechanisms to autonomously and automatically control the pitches of blades 275 based on an amount of thrust generated by thrust-controlled variable pitch propeller 200. In particular, thrust-controlled variable pitch propeller 200 utilizes blade hub 250 that is able to slide along ball spline shaft 230. Control arms 260 are coupled to blade hub 250, limit the movements of blade hub 250, and cause blades 275 to rotate and change pitch positions as blade hub 250 slides along ball spline shaft 230. A thrust spring 220 is installed around ball spline shaft 230 and controls the sliding of blade hub 250 along ball spline shaft 230 based on an amount of thrust provided by thrust-controlled variable pitch propeller 200, thereby autonomously and automatically adjusting the pitch positions of blades 275 based on the amount of thrust.

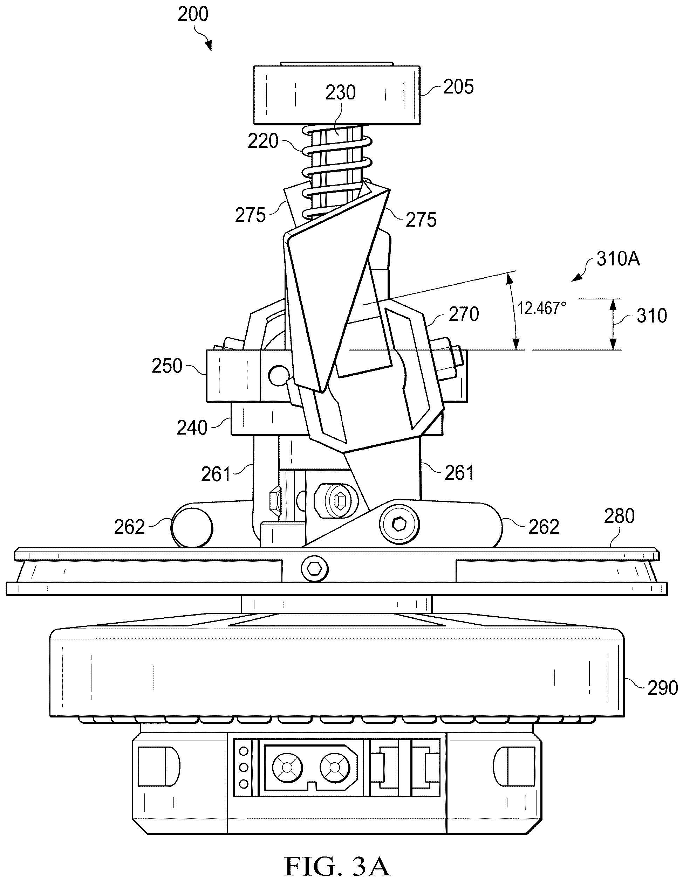

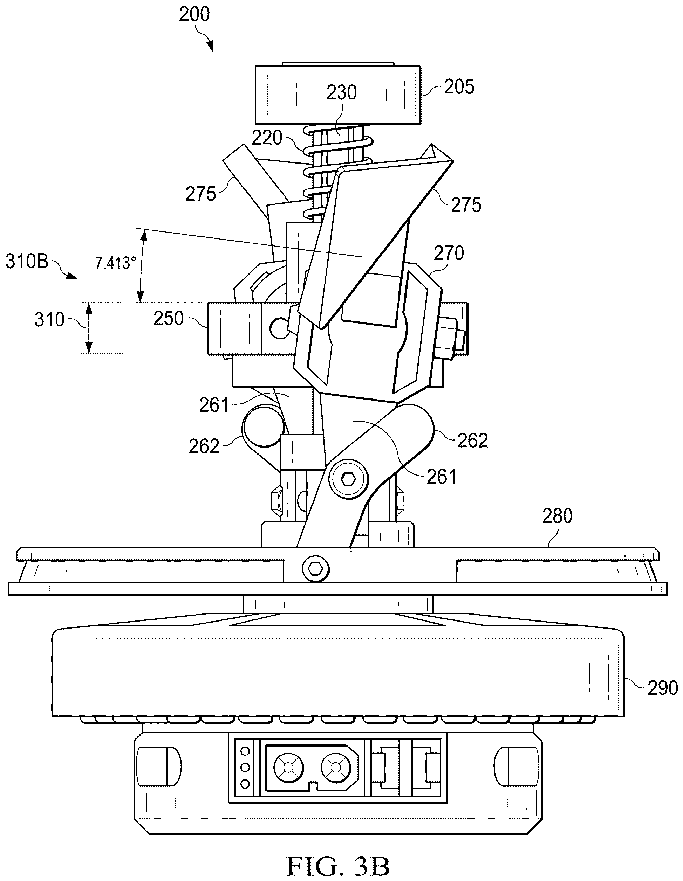

The different positions of thrust-controlled variable pitch propeller 200 during horizontal and vertical flight are illustrated in FIGURES 3A and 3B. In the "HORIZONTAL FLIGHT" position as illustrated in FIGURE 3A, thrust spring 220 is fully extended and has pushed blade hub 250 along ball spline shaft 230 towards base mounting plate 280, thereby causing blades 275 to be at their highest blade pitch 310A (e.g., 12.467 degrees). Thrust spring 220 has not been compressed due to the lower amount of thrust being produced by thrust-controlled variable pitch propeller 200. In the "VERTICAL FLIGHT" position as illustrated in FIGURE 3B, thrust spring 220 is fully compressed and has allowed blade hub 250 to slide up ball spline shaft 230 and away from mounting plate 280 a distance 310, thereby causing blades 275 to be at their lowest blade pitch 310B (e.g., 7.413 degrees). Thrust spring 220 has been compressed due to the higher amount of thrust being produced by thrust-controlled variable pitch propeller 200.

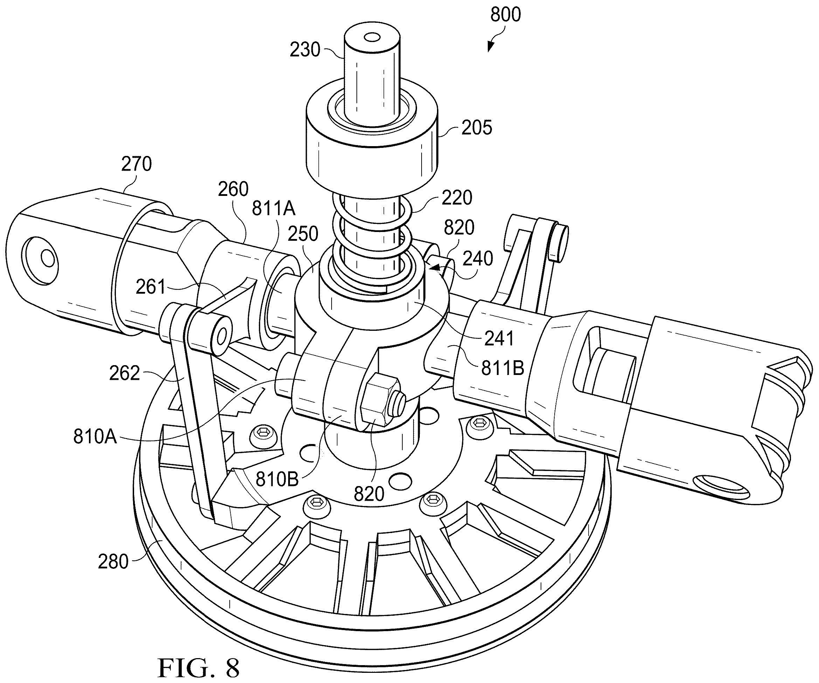

FIGURE 8 illustrates a thrust-controlled variable pitch propeller 800 that may be utilized as thrust-controlled variable pitch propeller 130 by aircraft 100 of FIGURE 1, according to particular embodiments. Like thrust-controlled variable pitch propeller 200, some embodiments of thrust-controlled variable pitch propeller 800 include a top collet 205, a thrust spring 220, a ball spline shaft 230, a ball spline bearing 240, a blade hub 250, control arms 260, blade holders 270, and a base mounting plate 280. Each blade holder 270 is coupled to a blade 275. Base mounting plate 280 couples thrust-controlled variable pitch propeller 200 to a motor 290. Unlike thrust-controlled variable pitch propeller 200, however, hub 250 of thrust-controlled variable pitch propeller 800 includes two halves 810A and 820B that are fastened together about ball spline bearing 240 with one or more fasteners 820. In addition, each upper control arm linkage 261 of thrust-controlled variable pitch propeller 800 is pivotably coupled to a shaft 811A or 811B of half 810A or 820B. In some embodiments, shafts 811A and 811B are each orthogonal to ball spline shaft 230 and are aligned with each other across ball spline shaft 230 as illustrated. Shafts 811A and 811B may be removably coupled to halves 810A and 810B (e.g., via threads or a fastener) or may be permanently coupled to halves 810A and 810B (e.g., via unibody construction, welding, and the like). Furthermore, upper control arm linkages 261 and lower control arm linkages 262 of thrust-controlled variable pitch propeller 800 are modified from thrust-controlled variable pitch propeller 200. For example, the arms of upper control arm linkages 261 of thrust-controlled variable pitch propeller 800 are rotated approximately ninety degrees from thrust-controlled variable pitch propeller 200. Furthermore, lower control arm linkages 262 of thrust-controlled variable pitch propeller 800 are straight members unlike the lower control arm linkages 262 of thrust-controlled variable pitch propeller 200.

Although the present disclosure and its advantages have been described in detail, it should be understood that various changes, substitutions, and alterations can be made herein without departing from the spirit and scope of the disclosure as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

Moreover, the description in this patent document should not be read as implying that any particular element, step, or function can be an essential or critical element that must be included in the claim scope. Also, none of the claims can be intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "member," "module," "device," "unit," "component," "element," "mechanism," "apparatus," "machine," "system," "processor," "processing device," or "controller" within a claim can be understood and intended to refer to structures known to those skilled in the relevant art, as further modified or enhanced by the features of the claims themselves, and can be not intended to invoke 35 U.S.C. § 112(f). Even under the broadest reasonable interpretation, in light of this paragraph of this specification, the claims are not intended to invoke 35 U.S.C. § 112(f) absent the specific language described above.

While the include figures illustrate particular embodiments having particular components, this disclosure contemplates other embodiments having some or all of the described components, as well as additional components not described. Components of the present disclosure may be any suitable shape and may be in any suitable configuration.

As used in this document, "each" refers to each member of a set or each member of a subset of a set. Furthermore, as used in the document "or" is not necessarily exclusive and, unless expressly indicated otherwise, can be inclusive in certain embodiments and can be understood to mean "and/or." Similarly, as used in this document "and" is not necessarily inclusive and, unless expressly indicated otherwise, can be inclusive in certain embodiments and can be understood to mean "and/or."

The disclosure may be embodied in other specific forms without departing from the spirit or essential characteristics thereof. For example, each of the new structures described herein, may be modified to suit particular local variations or requirements while retaining their basic configurations or structural relationships with each other or while performing the same or similar functions described herein. The present embodiments are therefore to be considered in all respects as illustrative and not restrictive. Accordingly, the scope of the disclosures can be established by the appended claims rather than by the foregoing description. All changes which come within the meaning and range of equivalency of the claims are therefore intended to be embraced therein. Further, the individual elements of the claims are not well-understood, routine, or conventional. Instead, the claims are directed to the unconventional inventive concept described in the specification.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, functions, operations, or steps, any of these embodiments may include any combination or permutation of any of the components, elements, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

The following clauses (which are not claims) may provide aspects, features or embodiments of the disclosure:
Clause 1. An aircraft comprising:
   a fixed wing;
   a motor; and
   a variable pitch propeller coupled to the motor, the variable pitch propeller comprising:
      a main shaft;
      a hub configured to slide along the main shaft;
      a plurality of propeller blades, each propeller blade coupled to the hub and configured to rotate between a high-pitch position and a low-pitch position as the hub slides along the main shaft; and
      a thrust spring installed around the main shaft, the thrust spring configured to control the sliding of the hub along the main shaft based on an amount of thrust provided by the variable pitch propeller, thereby automatically adjusting the pitch positions of the propeller blades based on the amount of thrust.
Clause 2. The aircraft of Clause 1, wherein the aircraft is a vertical takeoff and landing (VTOL) aircraft.
Clause 3. The aircraft of Clause 1, wherein the motor and the variable pitch propeller are configured to pivot between a vertical flight position and a horizontal flight position.
Clause 4. The aircraft of Clause 1, wherein the pitch positions of the propeller blades are automatically adjusted by the thrust spring in the absence of any other actuator or computer controller.
Clause 5. The aircraft of Clause 1, wherein:
   the main shaft is a ball spline shaft;
   the variable pitch propeller further comprises a ball spline bearing that is slidably coupled to the ball spline shaft; and
   the hub is coupled to the ball spline bearing.
Clause 6. The aircraft of Clause 1, wherein each propeller blade is coupled to the hub via a control arm, each control arm comprising:
   an upper control arm linkage that is pivotably coupled to the hub; and
   a lower control arm linkage that is pivotably coupled to the upper control arm linkage and a base mounting plate.
Clause 7. The aircraft of Clause 1, wherein:
   the hub comprises:
   a first half comprising a first shaft that is orthogonal to the main shaft; and
   a second half comprising a second shaft that is orthogonal to the main shaft, wherein the first shaft and the second shaft are aligned with each other across the main shaft.
Clause 8. A variable pitch propeller comprising:
   a ball spline shaft;
   a collet coupled proximate one end of the ball spline shaft;
   a ball spline bearing configured to slide along the ball spline shaft;
   a thrust spring installed around the ball spline shaft between the collet and the ball spline bearing;
   a base mounting plate coupled to the ball spline on an opposite side of the ball spline bearing from the thrust spring;
   a hub coupled to the ball spline bearing;
   a plurality of control arms, each control arm coupled to the hub and the base mounting plate;
   a plurality of blade holders, each blade holder coupled to one of the control arms;
   a plurality of propeller blades, each propeller blade coupled to one of the blade holders and configured to rotate between a high-pitch position and a low-pitch position as the ball spline bearing slides along the ball spline shaft; and
   wherein the thrust spring is configured to control the sliding of the ball spline bearing along the ball spline shaft based on an amount of thrust provided by the variable pitch propeller, thereby automatically adjusting the pitch positions of the propeller blades based on the amount of thrust.
Clause 9. The variable pitch propeller of Clause 8, wherein each control arm comprises:
   an upper control arm linkage that is pivotably coupled to the hub; and
   a lower control arm linkage that is pivotably coupled to the upper control arm linkage and the base mounting plate.
Clause 10. The variable pitch propeller of Clause 8, further comprising a spinner that is coupled to the base mounting plate, the spinner comprising a plurality of notches that permit the propeller blades to rotate between the high-pitch positions and the low-pitch positions as the ball spline bearing slides along the ball spline shaft.
Clause 11. The variable pitch propeller of Clause 8, wherein:
   the hub comprises:
   a center aperture comprising a center point that is concentric with the ball spline shaft;
   a first axis running through the center point;
   a second axis running through the center point and orthogonal to the first axis; and
   two flat sides, wherein the two flat sides are parallel to each other, each flat side is parallel to the first axis, and each flat side is orthogonal to the second axis; and
   each control arm is coupled to one of the flat sides at a location that is off-center from the second axis.
Clause 12. The variable pitch propeller of Clause 8, wherein the base mounting plate comprises a clamp flange shaft mount that is configured to couple the base mounting plate to the ball spline shaft.
Clause 13. A variable pitch propeller comprising:
   a ball spline shaft;
   a ball spline bearing configured to slide along the ball spline shaft;
   a thrust spring installed around the ball spline shaft;
   a hub coupled to or integrated with the ball spline bearing;
   a plurality of control arms, each control arm coupled to the hub;
   a plurality of blade holders, each blade holder coupled to one of the control arms;
   a plurality of propeller blades, each propeller blade coupled to one of the blade holders and configured to rotate between a high-pitch position and a low-pitch position as the ball spline bearing slides along the ball spline shaft; and
   wherein the thrust spring is configured to control the sliding of the ball spline bearing along the ball spline shaft based on an amount of thrust provided by the variable pitch propeller, thereby automatically adjusting the pitch positions of the propeller blades based on the amount of thrust.
Clause 14. The variable pitch propeller of Clause 13, further comprising a base mounting plate coupled to the ball spline on an opposite side of the ball spline bearing from the thrust spring.
Clause 15. The variable pitch propeller of Clause 14, wherein each control arm comprises:
   an upper control arm linkage that is pivotably coupled to the hub; and
   a lower control arm linkage that is pivotably coupled to the upper control arm linkage and the base mounting plate.
Clause 16. The variable pitch propeller of Clause 14, further comprising a spinner that is coupled to the base mounting plate, the spinner comprising a plurality of notches that permit the propeller blades to rotate between the high-pitch positions and the low-pitch positions as the ball spline bearing slides along the ball spline shaft.
Clause 17. The variable pitch propeller of Clause 14, wherein the base mounting plate comprises a clamp flange shaft mount that is configured to couple the base mounting plate to the ball spline shaft.
Clause 18. The variable pitch propeller of Clause 13, wherein:
   the hub comprises:
      a center aperture comprising a center point that is concentric with the ball spline shaft;
      a first axis running through the center point;
      a second axis running through the center point and orthogonal to the first axis; and
      two flat sides, wherein the two flat sides are parallel to each other, each flat side is parallel to the first axis, and each flat side is orthogonal to the second axis; and
   each control arm is coupled to one of the flat sides at a location that is off-center from the second axis.
Clause 19. The variable pitch propeller of Clause 13, further comprising a collet coupled to the ball spline shaft.
Clause 20. The variable pitch propeller of Clause 19, wherein the thrust spring is installed around the ball spline shaft between the collet and the ball spline bearing.

## Claims

1. An aircraft comprising:
a fixed wing;
a motor; and
a variable pitch propeller coupled to the motor, the variable pitch propeller comprising:
a main shaft;
a hub configured to slide along the main shaft;
a plurality of propeller blades, each propeller blade coupled to the hub and configured to rotate between a high-pitch position and a low-pitch position as the hub slides along the main shaft; and
a thrust spring installed around the main shaft, the thrust spring configured to control the sliding of the hub along the main shaft based on an amount of thrust provided by the variable pitch propeller, thereby automatically adjusting the pitch positions of the propeller blades based on the amount of thrust.

2. The aircraft of Claim 1, wherein the aircraft is a vertical takeoff and landing (VTOL) aircraft.

3. The aircraft of Claim 1 or Claim 2, wherein the motor and the variable pitch propeller are configured to pivot between a vertical flight position and a horizontal flight position.

4. The aircraft of Claim 1 or Claim 2 or Claim 3, wherein the pitch positions of the propeller blades are automatically adjusted by the thrust spring in the absence of any other actuator or computer controller.

5. The aircraft of Claim 1, or any other preceding claim, wherein:
the main shaft is a ball spline shaft;
the variable pitch propeller further comprises a ball spline bearing that is slidably coupled to the ball spline shaft; and
the hub is coupled to the ball spline bearing.

6. The aircraft of Claim 1, or any other preceding claim, wherein each propeller blade is coupled to the hub via a control arm, each control arm comprising:
an upper control arm linkage that is pivotably coupled to the hub; and
a lower control arm linkage that is pivotably coupled to the upper control arm linkage and a base mounting plate.

7. The aircraft of Claim 1, or any other preceding claim, wherein:
the hub comprises:
a first half comprising a first shaft that is orthogonal to the main shaft; and
a second half comprising a second shaft that is orthogonal to the main shaft, wherein the first shaft and the second shaft are aligned with each other across the main shaft.

8. A variable pitch propeller comprising:
a ball spline shaft;
a collet coupled proximate one end of the ball spline shaft;
a ball spline bearing configured to slide along the ball spline shaft;
a thrust spring installed around the ball spline shaft between the collet and the ball spline bearing;
a base mounting plate coupled to the ball spline on an opposite side of the ball spline bearing from the thrust spring;
a hub coupled to the ball spline bearing;
a plurality of control arms, each control arm coupled to the hub and the base mounting plate;
a plurality of blade holders, each blade holder coupled to one of the control arms;
a plurality of propeller blades, each propeller blade coupled to one of the blade holders and configured to rotate between a high-pitch position and a low-pitch position as the ball spline bearing slides along the ball spline shaft; and
wherein the thrust spring is configured to control the sliding of the ball spline bearing along the ball spline shaft based on an amount of thrust provided by the variable pitch propeller, thereby automatically adjusting the pitch positions of the propeller blades based on the amount of thrust.

9. The variable pitch propeller of Claim 8, wherein any one or more of:
a) each control arm comprises:
an upper control arm linkage that is pivotably coupled to the hub; and
a lower control arm linkage that is pivotably coupled to the upper control arm linkage and the base mounting plate;
b) the variable pitch propeller further comprises a spinner that is coupled to the base mounting plate, the spinner comprising a plurality of notches that permit the propeller blades to rotate between the high-pitch positions and the low-pitch positions as the ball spline bearing slides along the ball spline shaft; and/or
c) the base mounting plate comprises a clamp flange shaft mount that is configured to couple the base mounting plate to the ball spline shaft.

10. The variable pitch propeller of Claim 8 or Claim 9, wherein:
the hub comprises:
a center aperture comprising a center point that is concentric with the ball spline shaft;
a first axis running through the center point;
a second axis running through the center point and orthogonal to the first axis; and
two flat sides, wherein the two flat sides are parallel to each other, each flat side is parallel to the first axis, and each flat side is orthogonal to the second axis; and
each control arm is coupled to one of the flat sides at a location that is off-center from the second axis.

11. A variable pitch propeller comprising:
a ball spline shaft;
a ball spline bearing configured to slide along the ball spline shaft;
a thrust spring installed around the ball spline shaft;
a hub coupled to or integrated with the ball spline bearing;
a plurality of control arms, each control arm coupled to the hub;
a plurality of blade holders, each blade holder coupled to one of the control arms;
a plurality of propeller blades, each propeller blade coupled to one of the blade holders and configured to rotate between a high-pitch position and a low-pitch position as the ball spline bearing slides along the ball spline shaft; and
wherein the thrust spring is configured to control the sliding of the ball spline bearing along the ball spline shaft based on an amount of thrust provided by the variable pitch propeller, thereby automatically adjusting the pitch positions of the propeller blades based on the amount of thrust.

12. The variable pitch propeller of Claim 11, further comprising a base mounting plate coupled to the ball spline on an opposite side of the ball spline bearing from the thrust spring.

13. The variable pitch propeller of Claim 11 or Claim 12, wherein any one or more of:
a) each control arm comprises:
an upper control arm linkage that is pivotably coupled to the hub; and
a lower control arm linkage that is pivotably coupled to the upper control arm linkage and the base mounting plate;
b) the variable pitch propeller further comprises a spinner that is coupled to the base mounting plate, the spinner comprising a plurality of notches that permit the propeller blades to rotate between the high-pitch positions and the low-pitch positions as the ball spline bearing slides along the ball spline shaft; and/or
c) the base mounting plate comprises a clamp flange shaft mount that is configured to couple the base mounting plate to the ball spline shaft.

14. The variable pitch propeller of Claim 11 or Claim 12 or Claim 13, wherein:
the hub comprises:
a center aperture comprising a center point that is concentric with the ball spline shaft;
a first axis running through the center point;
a second axis running through the center point and orthogonal to the first axis; and
two flat sides, wherein the two flat sides are parallel to each other, each flat side is parallel to the first axis, and each flat side is orthogonal to the second axis; and
each control arm is coupled to one of the flat sides at a location that is off-center from the second axis.

15. The variable pitch propeller of Claim 11, or any of claims 12 to 15, further comprising a collet coupled to the ball spline shaft, and optionally or preferably wherein the thrust spring is installed around the ball spline shaft between the collet and the ball spline bearing.
